# EUROPÄISCHE PATENTSCHRIFT

(11) **EP 4 666 360 B1**
(45) Veröffentlichungstag und Bekanntmachung des Hinweises auf die Patenterteilung: **25.11.2026**
(21) Anmeldenummer: 25704174.9
(22) Anmeldetag: 04.02.2025
(51) Int. Cl.: H02G 5/04, H01R 25/14

(54) **BAUTEIL MIT RASTVORRICHTUNG FÜR EIN STROMSCHIENENSYSTEM**
COMPONENT WITH LATCHING DEVICE FOR A BUSBAR SYSTEM
COMPOSANT AVEC SYSTÈME DE VERROUILLAGE POUR UN SYSTÈME DE BARRES OMNIBUS

(30) Priorität: 27.02.2024 DE 202024100905 U
(43) Veröffentlichungstag der Anmeldung: 24.12.2025
(73) Patentinhaber: Zumtobel Lighting GmbH, 6850 Dornbirn (AT)
(72) Erfinder: KOHLER, Christian, 6850 Dornbirn (AT)
(74) Vertreter: Kiwit, Benedikt
(86) Internationale Anmeldenummer: PCT/EP2025/052858
(87) Internationale Veröffentlichungsnummer: WO 2025/180780

(56) Entgegenhaltungen:
- EP-B1- 3 701 606
- DE-A1- 102021 126 225
- US-A1- 2010 181 098
- US-A1- 2014 054 061
- US-B1- 7 470 861

## Beschreibung

Die Erfindung betrifft ein Bauteil für ein Stromschienensystem mit einer Rastvorrichtung. Die Rastvorrichtung erlaubt hierbei eine reversiblen Verrastung des Bauteils an einem zweiten Bauteil des Stromschienensystems. Ferner betrifft die Erfindung ein solches Stromschienensystem.

Bisher bekannte Rastvorrichtungen für solche Bauteile eines Stromschienensystems sind meist derart konzipiert, dass eine einmal bestehende Rastverbindung nicht mehr zerstörungsfrei getrennt werden kann, die Rastverbindung also nicht reversibel ist. Hierbei wird die Rastverbindung üblicherweise durch ein Schnappelement eines ersten Bauteils geschaffen, welches beim Einführen in eine Rastaufnahme eines zweiten Bauteils mit der Rastaufnahme interagiert und hier einschnappt. Eine nachträgliche Auftrennbarkeit und Wiederverwendbarkeit ist bislang nicht vorgesehen, mitunter auch aufgrund des limitierten Raums innerhalb des Stromschienensystems.

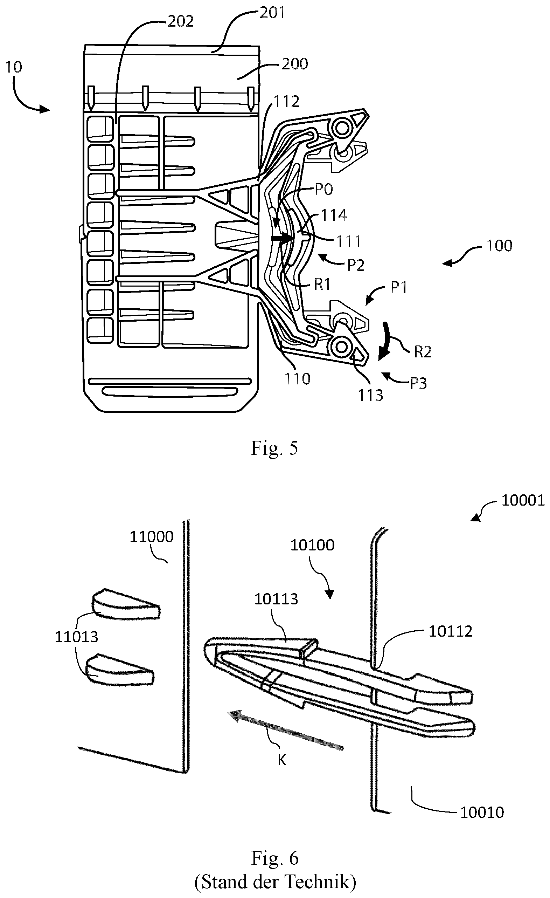

Eine solche bekannte Rastverbindung für Bauteile 10010, 11000 eines Stromschienensystems 10001 ist exemplarisch in Figur 6 gezeigt. Hierbei ist ersichtlich, dass das erste Bauteil 10010 eine Rastvorrichtung 10100 aufweist, welche in einer Kopplungsrichtung K vom ersten Bauteil 10010 hervorsteht. An einem Verbindungsbereich 10112 ist die Rastvorrichtung 10100 hierbei am ersten Bauteil 10010 gekoppelt. Das vom ersten Bauteil 10010 in Kopplungsrichtung K wegweisende Ende der Rastvorrichtung 10100 weist eine Rastkontur 10113 auf, welche zur nicht-reversiblen Verrastung mit einer komplementären Rastaufnahme 11013 des zweiten Bauteils 11000 ausgestaltet ist.

Mithin weisen solche bekannten Rastvorrichtungen, und somit auch deren jeweiliges Bauteil, den Nachteil auf, dass eine einmal eingegangene Rastverbindung nicht zerstörungsfrei gelöst werden kann. Ein flexibles Anordnen und Koppeln wie auch Trennen von Bauteilen innerhalb eines Stromschienensystems ist somit nicht möglich. Insofern ist mit der bekannten Rastvorrichtung nur äußerst aufwändig, unflexibel und kostenaufwändig eine Zusammensetzung eines Stromschienensystems anzupassen.

Die US 2014/054061 A1 beschreibt u.a. einen Stromschienenverbinder, der dazu dient, elektrische Energie den Stromschienen zuzuführen oder von diesen abzuleiten. Zudem wird ein elektrisches Bussystem beschrieben, welches eine erste und eine zweite Stromschienenanordnung sowie eine Überbrückungsverbinderanordnung umfasst.

Die EP 3 701 606 B1 beschreibt ein Leitungshaltersystem für ein Stromschienenelement welches u.a. ein Verbindungsteil und mindestens zwei Leitungshalter umfasst. Das Verbindungsteil, verbindet die beiden Leitungshalter an ihren Stirnseiten mechanisch miteinander. Das Verbindungsteil weist dabei eine Vielzahl an Ausnehmungen auf, die die ersten Ausnehmungen und die zweiten Ausnehmungen der beiden Leitungshalter miteinander verbindet, wobei die Ausnehmungen des Verbindungsteils seitlich durch Stege begrenzt werden, wobei das Verbindungsteil an einer Unterseite Spalte aufweist, die zwischen den Stegen angeordnet sind.

Die DE 10 2021 126225 A1 beschreibt einen Federkäfig zur elektrischen Kontaktierung von Leitern einer linearen Versorgungseinheit mit einer Stromschiene eines Verbindungselements. Der Federkäfig ist im Querschnitt im Wesentlichen U-förmig ausgebildet, mit zwei Schenkeln und einem diesen verbindenden Steg. Die Schenkel umgreifen die Stromschiene derart, dass zwischen dem Steg und der Stromschiene, begrenzt durch die Schenkel, ein Kontaktraum gebildet wird. Der Steg weist dazu eine Kontaktzone sowie zwei in Erstreckungsrichtung der Stromschiene ausgebildete, sich von der Kontaktzone in entgegengesetzte Richtung erstreckende Federarme auf.

Die US 2010/181098 A1 beschreibt ein Isolierprofil für eine Stromschiene, das mindestens eine sich in Längsrichtung des Profils erstreckende Kammer aufweist. Diese Kammer ist in Querschnittsansicht zu einer Seite hin offen, wodurch eine offene Vorderseite des Isolierprofils definiert wird, und ist zum Einbau einer Sammelschiene (Busbar) geeignet. Die Öffnung der offenen Kammer an der Vorderseite des Isolierprofils erweitert sich in seitlicher Richtung, sodass die Oberfläche der Vorderseite des Isolierprofils in Richtung der Mitte der jeweils nächstgelegenen offenen Kammer geneigt ist. Die Stromschiene kann eine mehrpolige Stromschiene sein, wobei das Isolierprofil eine regelmäßige Anordnung einer Gruppe mehrerer sich in Längsrichtung des Profils erstreckender, einseitig offener Kammern umfasst, die jeweils zum Einbau einer Sammelschiene geeignet sind.

Der Erfindung liegt daher die Aufgabe zugrunde, eine verbesserte Rastvorrichtung, respektive ein Bauteil mit einer solchen verbesserten Rastvorrichtung anzugeben, mittels der eine jeweilige Rastverbindung besonders flexibel und einfach reversibel herstellbar und wieder lösbar ist.

Diese Aufgabe wird gemäß der Erfindung mit dem im unabhängigen Anspruch genannten Gegenstand gelöst. In Kombination mit einem zweiten Bauteil ist ferner ein Stromschienensystem angegeben, dessen Bauteile besonders einfach und flexibel miteinander koppelbar und wieder trennbar sind. Besondere Ausführungsformen der Erfindung sind in den abhängigen Ansprüchen angegeben.

Gemäß der vorliegenden Erfindung ist ein Bauteil für ein Stromschienensystem vorgesehen, wobei das Bauteil einen Basiskörper und, eine Rastvorrichtung zur reversiblen Verrastung des Bauteils an einem zweiten Bauteil des Stromschienensystems bei Bewegung des Bauteils in einer Kopplungsrichtung, aufweist. Ferner ist vorgesehen, dass die Rastvorrichtung:
- zwei Rastarme jeweils mit einem proximalen Verbindungsabschnitt, mit dem der Rastarm mit dem Basiskörper verbunden ist, und einem vom Basiskörper beabstandeten distalen Rastabschnitt mit einer Rastkontur zur Verrastung des Bauteils an dem zweiten Bauteil des Stromschienensystems, wobei der jeweilige Rastarm derart elastisch verformbar ausgebildet ist, so dass die Rastkontur über den Verbindungsabschnitt von einer Rastposition in eine Freigabeposition auslenkbar ist; sowie
- einen die beiden Rastarme miteinander direkt verbindenden Verbindungssteg, wobei der Verbindungssteg jeweils derart in einem Bereich zwischen Verbindungsabschnitt und Rastkontur mit dem jeweiligen Rastarm gekoppelt ist, so dass bei Bewegung des Verbindungsstegs in einer Verschieberichtung von einer Ruheposition in eine Löseposition die Rastkonturen jeweils durch die elastische Verformung des zugeordneten Rastarms von der Rastposition in die Freigabeposition überführbar sind;
aufweist.

Mittels dieses so gestalteten Bauteils und insbesondere mittels der so gestalteten Rastvorrichtung, lässt sich in besonders einfacher, flexibler und dennoch stabilerweise das Bauteil mit einem anderen Bauteil verbinden. Hierbei wird insbesondere eine reversible Kopplung bewerkstelligt, welche für einen Benutzer besonders einfach bedienbar ist, da lediglich eine einzige Komponente - nämlich der Verbindungssteg - zu betätigen ist, um die Rastarme des ersten Bauteils vom zweiten Bauteil zu lösen, und so die Verbindung der beiden Bauteile zu trennen.

Ferner ist auch ein Stromschienensystem vorgeschlagen, welches ein erstes Bauteil gemäß einer hierin beschriebenen Ausführungsform gestaltet ist, und ein zweites Bauteil aufweist. Das zweite Bauteil weist hierbei zumindest zwei Rastelemente auf, welche zur Interaktion mit den Rastkonturen der Rastvorrichtung des ersten Bauteils ausgebildet sind, wobei die Rastvorrichtung des ersten Bauteils mit dem Rastelement reversibel gekoppelt ist. Hierdurch ist ein Stromschienensystem geschaffen, dass besonders einfach und flexibel an verschiedene Installationsszenarien anpassbar ist. Bevorzugterweise handelt es sich hierbei beim zweiten Bauteil um eine Stromschiene, wobei selbstverständlich auch andere Gestaltungen denkbar sind.

Optional kann vorgesehen sein, dass die Rastarme jeweils in Kopplungsrichtung vom Basiskörper hervorstehen. Optional kann vorgesehen sein, dass die Rastabschnitte und vorzugsweise die Rastarme sich in einer die Kopplungsrichtung K aufweisenden Ebene erstrecken. Optional kann vorgesehen sein, dass die Verbindungsabschnitte jeweils an einer in Kopplungsrichtung K weisenden äußeren Kante des Basiskörpers angeordnet sind. Hierdurch lässt sich jeweils besonders einfach und vorteilhaft eine besonders schmale Dimensionierung des Bauteils realisieren, wobei ferner auch die Kopplung mit dem zweiten Bauteil vereinfacht ist.

Optional kann vorgesehen sein, dass die aus der Bewegung des Verbindungsstegs in Verschieberichtung resultierende Auslenkung der jeweiligen Rastkontur von der Rastposition in die Freigabeposition in einer definierten Bewegungsrichtung erfolgt. Hierdurch ist besonders die Entkoppelbewegung der Rastkontur vorteilhaft gestaltet, wobei die definierte Bewegungsrichtung eine entsprechend weiter optimierte Gestaltung der komplementären Rastelemente des zweiten Bauteils ermöglicht.

Optional kann vorgesehen sein, dass die Bewegungsrichtungen der jeweiligen Rastkonturen im Wesentlichen senkrecht zur Verschieberichtung des Verbindungsstegs orientiert sind. Hierdurch ist eine besonders einfach und sichere Rastverbindung geschaffen, da zur Lösung der Rastverbindung die Komponenten in unterschiedliche Richtungen bewegt werden. Ein unbeabsichtigtes Lösen ist somit weiter erschwert. Alternativ oder zusätzlich kann vorgesehen sein, dass die Bewegungsrichtungen der jeweiligen Ratskonturen aufeinander zu oder voneinander weg gerichtet sind. Hiermit sind verschiedene Alternativen zur Lösebewegung des Rastarms von Rastposition in Freigabeposition bestimmt.

Optional kann vorgesehen sein, dass der Verbindungssteg in einem Bereich zwischen den beiden Rastarmen einen Anlageabschnitt aufweist, über den der Verbindungssteg durch Drücken in die Verschieberichtung von der Ruheposition in die Löseposition bewegbar ist. Hierdurch wird die Betätigung des Verbindungsstegs für einen Benutzer weiter vereinfacht. Vorzugsweise vergrößert der Anlageabschnitt eine dem Basiskörper des Bauteils zugewandte und/oder eine dem Basiskörper des Bauteils abgewandte Auflagefläche des Verbindungsstegs. Hierdurch wird die Betätigung des Verbindungsstegs für einen Benutzer äußerst vereinfacht, da die Angriffsfläche für eine Betätigung, beispielsweise mittels eines Werkzeugs, vergrößert ist und so ein Verfehlen des Verbindungsstegs erschwert ist. Mit dem so gestalteten Verbindungssteg ist es folglich einem Benutzer vereinfacht die Betätigung des Verbindungsstegs in Verschieberichtung von einer Ruheposition in eine Löseposition zu realisieren.

Optional kann vorgesehen sein, dass die Kopplung zwischen Verbindungssteg und jeweiligem Rastarm im Wesentlichen starr ist. Hierdurch wird bewerkstelligt, dass der Rastarm im Bereich der Kopplung mit dem Verbindungssteg äußerst stabil geformt ist, wodurch eine Verformung dieses Bereichs im Wesentlichen verhindert ist. Dies begünstigt wiederum eine Veränderung im Bereich des Rastarms zwischen Verbindungsabschnitt und Kopplungsstelle mit dem Verbindungssteg. Hierdurch lässt sich der Rastarm stabil und dennoch dehnbar gestalten, wobei gleichzeitig ein Verändern der Rastkontur vermieden ist, sodass die Zuverlässigkeit der reversiblen Rastverbindung weiter erhöht ist. Alternativ oder zusätzlich kann weiter vorgesehen sein, dass der Verbindungssteg mit den Rastarmen integral einstückig ausgebildet ist. Hierdurch lässt sich die Rastvorrichtung besonders einfach, materialsparend und kostengünstig herstellen. Insbesondere kann auf zusätzliche Elemente wie Scharniere, Verbindungselemente oder dergleichen verzichtet werden.

Optional kann vorgesehen sein, dass die Rastvorrichtung im Wesentlichen spiegelsymmetrisch zu einer Spiegelachse, welche parallel zur Kopplungsrichtung verläuft, ausgebildet ist. Dies bringt den wesentlichen Vorteil mit sich, dass die verschiedenen symmetrischen Abschnitte der Rastvorrichtung gleichmäßig belastet werden, wodurch die Stabilität und damit auch Lebensdauer der Rastvorrichtung erhöht sind. Ferner wird hierdurch die Bedienung der Rastvorrichtung vereinfacht.

Optional kann vorgesehen sein, dass jede Rastkontur durch eine hervorstehende Rastnase gebildet ist, wobei die Rastnasen bevorzugt jeweils ihrer Bewegungsrichtung entgegengesetzt vorstehen. Hierdurch wird die Stabilität der durch die Rastvorrichtung erzeugten Rastverbindung weiter verbessert.

Optional kann vorgesehen sein, dass die Rastkontur jedes Rastarms auf einer dem jeweils anderen Rastarm zugewandten Seite angeordnet ist; oder wobei die Rastkontur jedes Rastarms auf einer dem jeweils anderen Rastarm abgewandten Seite angeordnet ist. Hierdurch lassen sich unterschiedliche Koppelszenarien abhängig von der jeweiligen Gestaltung der Rastelemente des zweiten Bauteils realisieren, was wiederum die Einsetzbarkeit des so geschaffenen Bauteils mit der Rastvorrichtung erhöht.

Optional kann vorgesehen sein, dass zumindest ein Rastarm einen Stützabschnitt aufweist, welcher, vorzugsweise im Bereich der zugeordneten Rastkontur, quer zur Koppelrichtung und vorzugsweise auch quer zur Bewegungsrichtung seitlich vorragt. Mittels eines solchen Stützabschnitts lässt sich besonders vorteilhaft bewerkstelligen, dass im mit einem zweiten Bauteil gekoppelten und in einem Träger des Stromschienensystems eingesetzten Zustand der Stützabschnitt mit einer Seitenwand des Trägers, respektive des Stromschienensystems, interagiert und so den Rastarm in Richtung des zweiten Bauteils drückt. Hierdurch lässt sich die Stabilität der Rastverbindung weiter erhöhen, da ein seitliches Auskommen der Rastvorrichtung des ersten Bauteils vom Rastelement des zweiten Bauteils zusätzlich verhindert ist. Dies ist insbesondere in Szenarien relevant, in denen ein Spiel zwischen den Bauteilen und einer Wand des Stromschienensystems besteht.

Optional kann vorgesehen sein, dass das Bauteil, vorzugsweise der Basiskörper, ferner einen Führungsabschnitt zur Führung eines Werkzeugs auf den Verbindungssteg zu aufweist, vorzugsweise parallel zur Verschieberichtung R, um den Verbindungssteg von der Ruheposition in die Löseposition zu bewegen. Hierdurch wird die Bedienung durch einen Benutzer weiter vereinfacht, wobei zudem sichergestellt ist, dass ein versehentliches Lösen der Rastverbindung erfolgt. Bevorzugt erstreckt sich der Führungsabschnitt entlang einer Breite des Basiskörpers, insbesondere entlang der gesamten Breite des Basiskörpers. Dies vereinfacht die Bedienung weiter, da nunmehr über die (gesamte) Breite hinweg der Benutzer ein Werkzeug zur Betätigung verwenden kann.

Hierbei kann weiter optional vorgesehen sein, dass der Führungsabschnitt als eine Einbuchtung des Basiskörpers gebildet ist, welche sich von einem dem Verbindungssteg zugewandten Ende des Basiskörpers, vorzugsweise der äußeren Kante, weg wenigstens teilweise oder vollständig entlang des Basiskörpers, vorzugsweise im Wesentlichen parallel zur Verschieberichtung, erstreckt. Mit dem so geschaffenen Kanal, ist wird die Betätigung der Rastvorrichtung durch den Benutzer weiter vereinfacht, da dieser nunmehr von einer Rückseite des ersten Bauteils her ein Werkzeug in die Einbuchtung einführen kann, und so in besonders einfacher Weise den Verbindungsabschnitt bedienen kann. Hierbei ist weiter bevorzugt die Einbuchtung eine Breite a aufweist, und wobei der Führungsabschnitt ferner eine Verjüngung aufweist, welche die Breite a der Einbuchtung zum Verbindungssteg hin verjüngt, wobei bevorzugt die Verjüngung zur zentrierten Zuführung eines Werkzeugs auf den Verbindungssteg, und insbesondere auf den Anlageabschnitt der Rastvorrichtung ausgebildet ist. Alternativ oder zusätzlich ist ferner bevorzugt die Führungsvorrichtung in einem Endbereich der Einbuchtung, der dem Verbindungssteg zugewandt ist, eine in die Einbuchtung vorstehende Erhebung aufweist, wobei bevorzugt die Erhebung zur Zuleitung eines Werkzeugs auf den Verbindungssteg, und insbesondere auf den Anlageabschnitt der Rastvorrichtung ausgebildet ist. Hierdurch wird jeweils die Bedienung der Rastvorrichtung, und insbesondere des Verbindungsstegs weiter erleichtert und verbessert.

Optional kann hierbei weiterhin vorgesehen sein, dass der Führungsabschnitt eine Durchgangsöffnung von einer Innenseite des Basiskörpers hin zu einer Außenseite des Basiskörpers aufweist, welche sich in Verschieberichtung zum Verbindungssteg hin erstreckt, und welche sich bevorzugt bis zur dem Verbindungssteg zugewandten Kante des Basiskörpers erstreckt. Mit dieser speziellen Ausgestaltung ist es nunmehr möglich, eine Rastvorrichtung in einfacher und unkomplizierter zu bedienen, gerade wenn die Zugänglichkeit von einer Rückseite des ersten Bauteils nicht ohne Weiteres unproblematisch gegeben ist. Das Vorsehen einer solchen Durchgangsöffnung erleichtert somit das Betätigen des Verbindungsstegs und damit auch das Lösen einer bestehenden Rastverbindung.

Optional kann vorgesehen sein, dass die Rastarme und/oder der Verbindungssteg Versteifungsabschnitte aufweisen. Hierdurch lassen sich die jeweiligen Abschnitte weiter stabilisieren, und ein ungewünschtes Verformen bei Betätigung der Rastvorrichtung verhindern.

Optional kann vorgesehen sein, dass das Bauteil ein Spritzgussteil ist. Hierdurch lässt sich das Bauteil besonders einfach, kostengünstig, materialsparend und dennoch stabil herstellen. Alternativ oder zusätzlich ist das Bauteil integral einstückig gebildet, wodurch die Verbindung zwischen Rastarm, Verbindungssteg und Bauteil besonders einfach aber dennoch stabil gestaltet ist.

Optional kann vorgesehen sein, dass das Bauteil ein Berührungsschutz für ein Ende einer Stromschiene des Stromschienensystems ist; oder wobei das Bauteil ein Komponententräger des Stromschienensystems ist; oder wobei das Bauteil ein Teil für eine BUS-Bar Verlängerung, beispielsweise eine Stromschiene, des Stromschienensystems ist; oder wobei das Bauteil ein elektrischer Verbinder des Stromschienensystems ist. Mit jeder dieser Ausführungen lässt sich die Rastvorrichtung besonders vorteilhaft verwenden, wobei der Vorzug der Reversibilität besonders stark ausgeprägt ist.

Optional kann vorgesehen sein, dass das Bauteil Kabelkanäle, welche parallel zur Kopplungsrichtung verlaufen, aufweist; wobei bevorzugt das Bauteil im Querschnitt längs zur Kopplungsrichtung im Wesentlichen U-förmig gebildet ist; wobei bevorzugt die Kabelkanäle auf einer nach innen gewandter Seite des Basiskörpers angeordnet sind. In dieser Gestaltung ist ein besonders einfach zu koppelndes und zu entfernendes Stromschienenbauteil geschaffen, wobei der Rastvorgang des Bauteils mit einem zweiten Bauteil mit der Verbindung der Kabelkanäle der beiden Bauteile ohne weitere Zwischenschritte erfolgt.

Die Erfindung wird im Folgenden anhand der verschiedenen Ausführungen sowie deren Gestaltungen, und mit Bezug auf die Zeichnungen näher erläutert. Es zeigen:
- Figur 1: eine schematische Darstellung in einer Schrägsicht von oben einer beispielhaften Ausführungsform eines erfindungsgemäßen Bauteils für ein Stromschienensystem mit einer Rastvorrichtung;
- Figur 2: eine schematische Darstellung in einer Seitenansicht einer beispielhaften Ausführungsform eines erfindungsgemäßen Bauteils für ein Stromschienensystem mit einer Rastvorrichtung;
- Figur 3: eine schematische Darstellung in einer Rücksicht einer beispielhaften Ausführungsform eines erfindungsgemäßen Bauteils für ein Stromschienensystem mit einer Rastvorrichtung;
- Figur 4: eine schematische Darstellung in einer Seitenansicht eines beispielhaften Stromschienensystems mit einer beispielhaften Ausführung eines erfindungsgemäßen ersten Bauteils und eines zweiten Bauteils im Koppelvorgang;
- Figur 5: eine schematische Darstellung in einer Seitenansicht einer beispielhaften Ausführungsform eines erfindungsgemäßen Bauteils für ein Stromschienensystem mit einer Rastvorrichtung bei Betätigung des Verbindungsstegs und dadurch bedingte Auslenkung der Rastkonturen;
- Figur 6: eine schematische Darstellung einer aus dem Stand der Technik bekannten Rastvorrichtung für Bauteile eines Stromschienensystems.

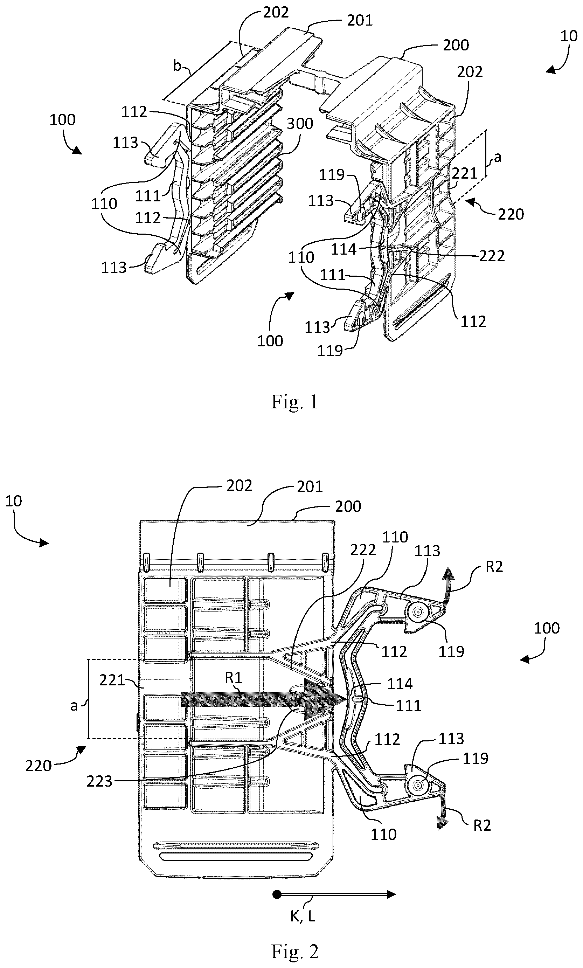

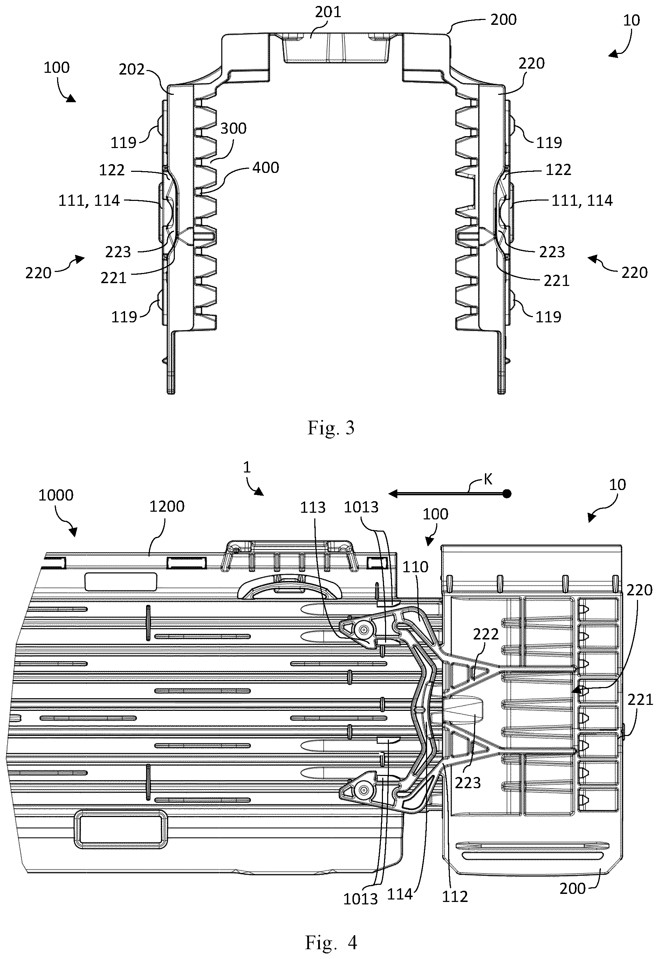

Die Figuren 1 bis 3 zeigen eine beispielhafte Ausführungsform eines erfindungsgemäßen Bauteils 10 für ein Stromschienensystem 1 mit einer beispielhaften Ausführungsform einer erfindungsgemäßen Rastvorrichtung 100 in verschiedenen Perspektiven. Die Figur 4 wiederum zeigt den Kopplungsvorgang einer solchen beispielhaften Ausführung eines erfindungsgemäßen (ersten) Bauteils 10 an ein zweites Bauteil 1000 eines Stromschienensystems 1. Die Figur 5 wiederum greift die aus den Figuren 1 bis 3 bekannte beispielhafte Ausführungsform eines erfindungsgemäßen Bauteils 10 auf und zeigt hierbei eine konkrete beispielhafte Ausführung der Auslenkung der Rastarme 110 bei Bedienung des Verbindungsstegs 111. Die Figur 5 zeigt insofern die Bewegungen der Bestandteile des ersten Bauteils 10 und insbesondere der Rastvorrichtung 100 bei Betätigung der Rastvorrichtung 100, also bei Bewegung des Verbindungsstegs 111 in einer Verschieberichtung R1 von einer Ruheposition P0 in eine Löseposition P2, wobei hierdurch die Rastarme 110 jeweils elastisch verformt werden und somit die Rastkonturen 113 jeweils von ihrer Rastposition P1 in ihre Freigabeposition P3 überführt werden. Mit dieser Bewegung der Rastkonturen 113 - im gezeigten Beispiel in Richtung R2 - lässt sich ein an ein zweites Bauteil 1000 gekoppeltes erstes Bauteil 10 (siehe Figur 4) wieder voneinander trennen, also die beiden Bauteil 10, 1000 reversibel miteinander koppeln, sodass das jeweilige Stromschienensystem 1 flexibel an jeweilige Anforderungen anpassbar ist, ohne dass einzelne Bestandteile 10, 1000 zerstört oder weggeschmissen werden müssen, sondern vielmehr in einfacher und flexibler Weise wiederverwendet werden können.

In den gezeigten beispielhaften Darstellungen der beispielhaften Ausführungen der Bauteile 10, 1000 des Stromschienensystems 1 ist das zweite Bauteil 1000 beispielhaft als Stromschiene ausgeführt, und das erste Bauteil 10 als Berührungsschutzendkappe der Stromschiene. Selbstverständlich kann die hierin beschriebene Rastvorrichtung 100 allerdings auch an anderen Ausführungen des ersten Bauteils 10 implementiert sein - wie beispielsweise ein Komponententräger des Stromschienensystems 1, oder ein Teil für eine BUS-Bar Verlängerung, beispielsweise eine Stromschiene, des Stromschienensystems 1, oder ein elektrischer Verbinder des Stromschienensystems 1. Zur reversiblen Kopplung mit einem - wie auch immer gestalteten - zweiten Bauteil 1000 wird hier lediglich das Vorhandensein entsprechender Rastelemente 1013 zur Interaktion mit den Rastkonturen 113 der Rastvorrichtung 100 des ersten Bauteils 10 benötigt. Insofern sind auch andere Implementierungen des zweiten Bauteils 1000 denkbar, insbesondere äquivalente zu oben genannten beispielhaften Ausführungen des ersten Bauteils 10.

Die in den Figuren gezeigte beispielhafte Ausführung des Bauteils 10 für ein Stromschienensystem 1 weist hierbei einen Basiskörper 200 und, eine Rastvorrichtung 100 zur reversiblen Verrastung des Bauteils 10 an einem zweiten Bauteil 1000 des Stromschienensystems 1 bei Bewegung des Bauteils 10 in einer Kopplungsrichtung K, auf. Die Rastvorrichtung 100 wiederum aufweisend:
- zwei Rastarme 110, die jeweils mit einem proximalen Verbindungsabschnitt 112, mit dem der Rastarm 110 mit dem Basiskörper 200 verbunden ist, und einem vom Basiskörper 200 beabstandeten distalen Rastabschnitt mit einer Rastkontur 113 zur Verrastung des Bauteils 10 an dem zweiten Bauteil 1000 des Stromschienensystems 1, wobei der jeweilige Rastarm 110 derart elastisch verformbar ausgebildet ist, so dass die Rastkontur 113 über den Verbindungsabschnitt 112 von einer Rastposition P1 in eine Freigabeposition P3 auslenkbar ist;
- einen die beiden Rastarme 110 miteinander direkt verbindenden Verbindungssteg 111, wobei der Verbindungssteg 111 jeweils derart in einem Bereich zwischen Verbindungsabschnitt 112 und Rastkontur 113 mit dem jeweiligen Rastarm 110 gekoppelt ist, so dass bei Bewegung des Verbindungsstegs 111 in einer Verschieberichtung R1 von einer Ruheposition P0 in eine Löseposition P2 die Rastkonturen 113 jeweils durch die elastische Verformung des zugeordneten Rastarms 110 von der Rastposition P1 in die Freigabeposition P3 überführbar sind, wie zuvor bereits thematisiert wurde.

Diese elastische Auslenkbarkeit der Rastarme 110, und damit des distalen Rastabschnitts mit der Rastkontur 113, ermöglicht zum einen, dass die Rastvorrichtung 100 des ersten Bauteils 10 an jeweilige Rastelemente 1013 des zweiten Bauteils 1000 aufschnappen kann, bei Bewegung des ersten Bauteils 10 auf das zweite Bauteil 1000 in Kopplungsrichtung K. Ferner ist die im obigen bereits beschriebene flexible Trennbarkeit basierend hierauf mit der speziellen Anordnung der Rastarme 110 und des Verbindungsstegs 111 bewerkstelligt.

Wie insbesondere aus den Figuren 1, 2, 4 und 5 ersichtlich, stehen in den gezeigten Ausführungsformen die Rastarme 110 jeweils in Kopplungsrichtung K vom Basiskörper 200 hervor. In der gezeigten Ausführungsform ist das Bauteil 10, respektive der Basiskörper 200 des Bauteils 10, im Querschnitt längs zur Kopplungsrichtung K im Wesentlichen U-förmig gebildet, mit zwei Seitenschenkeln 202, welche mittels eines Verbindungsschenkels 201 miteinander verbunden sind. An jedem der Seitenschenkel 202 ist hierbei eine Rastvorrichtung 100 vorgesehen, sodass das Bauteil 10 besonders stabil an ein entsprechendes zweites Bauteil 1000 gekoppelt werden kann. Alternativ oder zusätzlich kann ebenfalls vorgesehen sein, dass am Verbindungsschenkel 201 eine Rastvorrichtung 100 vorhanden ist. In anderen Ausführungsformen und Gestaltungen des ersten Bauteils 10, sind allerdings selbstverständlich auch entsprechend angepasste Anordnungen der Rastvorrichtungen 100 denkbar.

Wenn im Allgemeinen von einer Rastvorrichtung 100 gesprochen wird, so bezieht sich dies jeweils auf eine, mehrere oder alle Rastvorrichtungen 100 die an einem jeweiligen Bauteil 10 vorgesehen sind. In den gezeigten Ausführungsformen bezieht sich dies insofern auf eine der beiden oder beide gezeigte Rastvorrichtungen 100 des Bauteils 10, und kann ebenso gleichermaßen auch für die anderen vorgesehenen weiteren vorhandenen Rastvorrichtungen 100 gelten.

Aus den Figuren ist ferner ersichtlich, dass eine Längsrichtung L des Stromschienensystems 1 hierbei bevorzugt der Kopplungsrichtung K des ersten Bauteils 10 auf das zweite Bauteil 1000 entspricht. Die Kopplungsrichtung K entspricht damit also der Längsrichtung L des Stromschienensystems 1, und damit auch der Längsrichtung L des ersten und zweiten Bauteils 1, 1000. In Kopplungsrichtung K, respektive in Längsrichtung L weist der Basiskörper 200 eine Breite b auf. In der gezeigten Ausführung erstrecken sich Kabelkanäle 300 parallel zur Kopplungsrichtung über die gesamte Breite b des Basiskörpers 200. Die Kabelkanäle 300 sind hierbei jeweils auf einer nach innen gewandten Seite des Basiskörpers 200 angeordnet. Wie in Figur 3 skizziert, können innerhalb der Kabelkanäle 300 jeweils auch eine Drahtleitung 400 zur Stromversorgung und/oder Signalübertragung vorgesehen sein.

Hierbei erstrecken sich die Rastabschnitte und im Speziellen auch die Rastarme 110 in einer Ebene die die Kopplungsrichtung K, bzw. eine hierzu parallele Richtung, enthält, wie insbesondere aus Figur 2 und 3 ersichtlich. Ferner sind in der gezeigten Ausführung die Verbindungsabschnitte 112 der jeweiligen Rastarme 110 der einzelnen Rastvorrichtungen 100 jeweils an einer in Kopplungsrichtung K weisenden äußeren Kante des Basiskörpers 200 angeordnet.

In der gezeigten Ausführung ist ferner vorgesehen, dass der Verbindungssteg 111 in einem Bereich zwischen den beiden Rastarmen 110 einen Anlageabschnitt 114 aufweist, über den der Verbindungssteg 111 durch Drücken in die Verschieberichtung R1 von der Ruheposition P0 in die Löseposition P2 bewegbar ist. Dieser Anlageabschnitt 114 vergrößert hierbei die Auflagefläche zur Betätigung der Rastvorrichtung 100, respektive des Verbindungsstegs 111, wodurch die Bedienung weiter vereinfacht ist. Zudem stabilisiert der Anlageabschnitt 114 die Struktur des Verbindungsstegs 111 zusätzlich. Basierend auf der jeweiligen Implementierung der Rastvorrichtung 100 kann hierbei sowohl vorgesehen sein, dass der Anlageabschnitt 114 eine dem Basiskörper 200 zugewandte Auflagefläche des Verbindungsstegs 111 vergrößert, als auch, dass der Anlageabschnitt 114 eine dem Basiskörper 200 abgewandte Auflagefläche des Verbindungsstegs 111 vergrößert. In der gezeigten Ausführung ist eine Betätigung der Rastvorrichtung 100 über die dem Basiskörper 200 zugewandte Seite des Verbindungsstegs 111 vorgesehen, da hierbei die Verschieberichtung R1 des Verbindungsstegs 111 parallel zur Koppelrichtung K erfolgt. Somit bildet hierbei die dem Basiskörper 200 zugewandte Seite des Verbindungsstegs 111 die durch den Anlageabschnitt 114 vergrößerte Anlagefläche. In anderen alternativen Gestaltungen - beispielsweise in Ausführungen in denen die Verschieberichtung R1 invers zur Koppelrichtung K erfolgt - ist möglicherweise die dem Basiskörper 200 abgewandte Seite die zu betätigende Fläche, sodass dann der Anlagenabschnitt 114 diese Anlagefläche vergrößert.

Das Bauteil 10, respektive der Basiskörper 200, weist ferner einen Führungsabschnitt 220 zur Führung eines Werkzeugs hin zum Verbindungssteg 111 auf, wie insbesondere in den Figuren 1, 2 und 3 detaillierter gezeigt. Dieses Führen innerhalb des Führungsabschnitts 220, und damit auch der Führungsabschnitt 220 selbst, ist hierbei vorzugsweise parallel zur Verschieberichtung R1 gestaltet, wobei in der gezeigten beispielhaften Ausführung die Verschieberichtung R1 hierbei im Wesentlichen parallel zur Kopplungsrichtung K ist. Der Führungsabschnitt 220 erstreckt sich hierbei entlang der (gesamten) Breite b des Basiskörpers 200, sodass eine Zugänglichkeit des Verbindungsstegs 111 zur Betätigung der Rastvorrichtung 100 von einer Rückseite des Bauteils 10, also einer in Kopplungsrichtung K der mit den Verbindungsabschnitten 112 versehenen Seite des Bauteils 10 gegenüberliegenden Seite, besonders einfach ermöglicht ist.

Mit der Betätigung des Verbindungsstegs 111 mittels des entlang des Führungsabschnitts 220 geführten Werkzeugs wird sodann der Verbindungssteg 111 von der Ruheposition P0 in die Löseposition P2 bewegt, wie insbesondere in Figuren 2 und 5, respektive deren Zusammenschau, gezeigt. Hierdurch wird dann wiederum durch die Verbindung des Verbindungsstegs 111 mit den Rastarmen 110 die Rastkontur 113 ausgelenkt. In der gezeigten Ausführung ist hierbei vorgesehen, dass die Kopplung zwischen Verbindungssteg 111 und jeweiligem Rastarm 110 im Wesentlichen starr ist, und dass der Verbindungssteg 111 mit den Rastarmen 110 integral einstückig ausgebildet ist. Hierdurch wird eine besonders vorteilhafte Elastizität mit intrinsisch erzeugter Rückstellkraft zur automatischen Rücküberführung der Rastkontur 113 von der Freigabeposition P3 in die Rastposition P1 - also mitunter den Einschnappvorgang bei Kopplung des ersten Bauteils 10 mit dem zweiten Bauteil 1000 - besonders einfach und kostengünstig erzeugt.

Hinsichtlich des Führungsabschnitts 220 sind verschiedene Implementierungen denkbar. In den gezeigten beispielhaften Ausführungsformen ist der Führungsabschnitt 220 jeweils als eine Einbuchtung 221 des Basiskörpers 200 gebildet, welche sich von einem dem Verbindungssteg 111 zugewandten Ende des Basiskörpers 200 (und hierbei der äußeren Kante des Basiskörpers 200) weg entlang des Basiskörpers 200 im Wesentlichen parallel zur Verschieberichtung R1, erstreckt.

Die Einbuchtung 221 weist hierbei eine Breite a auf, welche bevorzugt an fachübliche Werkzeuge, wie beispielsweise einen Schlitzschraubenzieher oder einen Winkelschlüssel (beispielsweise einen Inbusschlüssel) angepasst ist, sodass der Benutzer/Monteur des Bauteils 10 bzw. des Stromschienensystems 1 in besonders einfacher und unkomplizierter Weise die Rastvorrichtung 100 bedienen kann. Ferner weist der Führungsabschnitt 220 eine Verjüngung 222 auf, welche die Breite a der Einbuchtung 221 zum Verbindungssteg 111 hin verjüngt, wobei die Verjüngung 222 zur zentrierten Zuführung des jeweiligen Werkzeugs auf den Verbindungssteg 111, und insbesondere auf den Anlageabschnitt 114 der Rastvorrichtung 100 ausgebildet ist.

Weiterhin ist in den Figuren gezeigt, dass die Führungsvorrichtung 220 in einem Endbereich der Einbuchtung 221, welche dem Verbindungssteg 111 zugewandt ist, eine in die Einbuchtung 221 vorstehende Erhebung 223 aufweist, welche zur Zuleitung bzw. Führung des jeweiligen Werkzeugs auf den Verbindungssteg 111, und insbesondere auf den Anlageabschnitt 114 der Rastvorrichtung 100, ausgebildet ist. Die Erhebung 223 ist hierbei im letzten Abschnitt der Verjüngung 222 angeordnet, sodass diese Strukturen synergistisch zusammenwirken und ein etwaiges eingeführtes Werkzeug besonders zielgerichtet und sicher auf den Verbindungssteg 111 zuleiten.

Alternativ oder auch zusätzlich kann allerdings ebenfalls vorgesehen sein, dass der Führungsabschnitt 220 eine Durchgangsöffnung von einer Innenseite des Basiskörpers 200 hin zu einer Außenseite des Basiskörpers 200 aufweist. Diese Ausführung ist allerdings nicht in den Figuren gezeigt. Hierbei erstreckt sich dann die Durchgangsöffnung in Verschieberichtung R1 zum Verbindungssteg 111 hin, und erstreckt sich hierbei im Speziellen bevorzugt bis zur dem Verbindungssteg 111 zugewandten Kante des Basiskörpers 200. Der Startpunkt der Durchgangsöffnung entlang der Breite b des Basiskörpers 200 ist hierbei flexibel wählbar. Durch die Gestaltung der Durchgangsöffnung über zumindest eine geringe Distanz entlang der Verschieberichtung R1 hin zum Verbindungssteg 111 der Rastvorrichtung 100 ist jedenfalls bereits eine erhebliche Vereinfachung der Bedienung gegeben. Der so geschaffene Führungsabschnitt 220 mit einer jeweiligen Durchgangsöffnung erlaubt eine besonders große Flexibilität hinsichtlich der Bedienung der Rastvorrichtung 100, da nunmehr (auch) von einer Innenseite des ersten Bauteils 10 her der Verbindungssteg 111 entlang der Verschieberichtung R1 bewegbar ist. Hierdurch ist es nun also auch in einfacher Weise möglich, die Rastvorrichtung 100 eines besonders langen Bauteils 10 zu bedienen, ohne ein im Wesentlichen ähnlich langes Werkzeug verwenden zu müssen, um im in einem Stromschienensystem 1 eingebauten Zustand eine zwischen den Bauteilen 10, 1000 eingegangene Kopplung wieder zu lösen, da nunmehr bequem von einer Innenseite des Bauteils 10 her die Bedienung erfolgen kann. Bevorzugt kann in diesem Fall auch vorgesehen sein, dass das zweite Bauteil 1000 an seiner dem ersten Bauteil 10 zugewandten Stirnseite an entsprechenden Wänden seines Basiskörpers 1200 eine entsprechend äquivalente Durchgangsöffnung bzw. einen äquivalenten Durchgangsschlitz für die jeweilige Rastvorrichtung 100 aufweist, sodass - je nach Position der Rastvorrichtung 100 am erste Bauteil 10, und damit je nach Position des Verbindungsstegs 111 relativ zum zweiten Bauteil 1000 im gekoppelten Zustand der beiden Bauteile 10, 1000 eine besonders einfache Handhabe bzw. Bedienbarkeit der Rastvorrichtung bewerkstelligt ist. Eine solche Ausgestaltung wäre beispielsweise in der in Figur 4 gezeigten Ausführung nützlich, insbesondere sofern die Betätigungsrichtung R1 invers zur Kopplungsrichtung K ausgestaltet sein sollte. Hierbei kann ferner vorgesehen sein, dass der Anlageabschnitt 114 (auch) in Richtung der Durchgangsöffnung die Anlagefläche vergrößert.

Die Durchgangsöffnung ist hierbei bevorzugt jeweils so am Basiskörper 200 angeordnet, dass sie im Wesentlichen auf gleicher Höhe zum Verbindungssteg 111 positioniert ist. Hierdurch wird die Bedienung der Rastvorrichtung 100 weiter vereinfacht.

Sofern eine solche Durchgangsöffnung vorgesehen ist, und der Basiskörper 200 ferner Kabelkanäle 300 aufweist, so ist besonders bevorzugt darauf zu achten, dass die Durchgangsöffnung zwischen zwei Kabelkanälen 300 angeordnet ist, derart, dass eine im Kabelkanal 300 potentiell enthaltene Drahtleitung 400 nicht durch die Durchgangsöffnung freigelegt ist, sodass der Benutzer bei Bedienung der Rastvorrichtung 100 keiner Berührungsgefahr mit den Drahtleitungen 400 ausgesetzt ist.

Mit Blick auf die Figuren 2 und 5 ist weiterhin ersichtlich, dass diese aus der Bewegung des Verbindungsstegs 111 in Verschieberichtung R1 resultierende Auslenkung der jeweiligen Rastkontur 113 von der Rastposition P1 in die Freigabeposition P3 hierbei in einer definierten Bewegungsrichtung R2 erfolgt.

Wie insbesondere aus Figur 2 ersichtlich, ist jede Rastkontur 113 durch eine hervorstehende Rastnase gebildet ist, welche jeweils der Bewegungsrichtung R2 der Rastkontur 113 entgegengesetzt vorstehen. In der gezeigten Ausführung ist hierbei vorgesehen, dass die Rastkontur 113 jedes Rastarms 110 auf einer dem jeweils anderen Rastarm 110 zugewandten Seite angeordnet ist. Alternativ hierzu kann jedoch ebenfalls vorgesehen sein, dass die Rastkontur 113 jedes Rastarms 110 auf einer dem jeweils anderen Rastarm 110 abgewandten Seite angeordnet ist - dies ist allerdings in den Figuren nicht gezeigt. Je nach Ausgestaltung der Bewegung R2 des Rastarms 110, kann es hierbei sinnvoll sein eine entsprechend darauf angepasste Anordnung der Rastkontur 113 vorzusehen.

Wie insbesondere in den Figuren 2 und 5 gezeigt, kann vorgesehen sein, dass die Bewegungsrichtungen R2 der jeweiligen Rastkonturen 113 im Wesentlichen senkrecht zur Verschieberichtung R1 des Verbindungsstegs 111 orientiert sind. Hierbei kann - wie gezeigt - die Bewegungsrichtung R2 der jeweiligen Rastkonturen 113 voneinander weg gerichtet sein, oder alternativ auch aufeinander zu gerichtet sein.

Ferner weist jeder der gezeigten Rastarme 110 einen Stützabschnitt 119 auf, der im Bereich einer jeweilig zugeordneten Rastkontur 113, quer zur Koppelrichtung K und auch quer zur Bewegungsrichtung R2 seitlich vorragt. Der Stützabschnitt ragt - wie insbesondere in Figur 3 gezeigt - seitlich von den Rastarmen 110 nach außen. Dieser Stützabschnitt 119 stützt die Rastvorrichtung 100, respektive zumindest den jeweiligen Rastarm 110, im mit dem zweiten Bauteil 1000 gekoppelten Zustand und im Stromschienensystem 1 eingesetzten Zustand (also innerhalb einer jeweiligen Tragschiene des Stromschienensystems 1 angeordneten Zustand), gegen eine jeweilige Seitenwand der Tragschiene. Hierdurch wird der Rastarm 110 und damit die Rastkontur 113 in Richtung einer jeweiligen Seitenwand des zweiten Bauteils 1000 (respektive des Basiskörpers 1013 des zweiten Bauteils 1000) gedrückt, sodass ein etwaiges bestehendes seitliches Spiel des Rastarms 110 verhindert oder zumindest minimiert ist. Hierdurch wird besonders vorteilhaft erzielt, dass die Kopplung der beiden Bauteile 10, 1000 überaus beständig ist und die Rastkonturen 113 des ersten Bauteils 10 nicht seitlich von den jeweiligen Rastelementen 1013 des zweiten Bauteils 1000 abkommen bzw. abrutschen.

Ebenfalls kann vorgesehen sein, dass die Rastarme 110 und/oder der Verbindungssteg 111 Versteifungsabschnitte aufweisen - wie insbesondere in den Figuren 1 und 2 angedeutet und besonders hinsichtlich der Auslenkungen der Bestandteile des ersten Bauteils 10 bei Betätigung der Rastvorrichtung 100 aus Figur 5 ersichtlich.

Ebenfalls ist gezeigt, dass die Rastvorrichtung 100 im Wesentlichen spiegelsymmetrisch zu einer Spiegelachse, welche parallel zur Kopplungsrichtung K verläuft, ausgebildet ist.

Das in den Figuren gezeigte Ausführungsbeispiel des Bauteils 10 ist hierbei jeweils integral einstückig gebildet und ferner durch ein Spritzgussverfahren hergestellt, sodass das Bauteil 10 ein Spritzgussteil ist.

Wie in Figur 4 gezeigt koppelt die Rastvorrichtung 100 des Bauteils 10 mit den vorhandenen Rastelementen 1013 des zweiten Bauteils 1000. In der gezeigten Ausführung hat das zweite Bauteil 1000 vier solcher Rastelemente 1013, wobei prinzipiell lediglich zwei Rastelemente 1013 ausreichend wären. Die Rastelemente 1013 können hierbei insbesondere beispielsweise Rastelemente 11013 von bereits bekannten Stromschienen 11000, wie aus Figur 6 bekannt, sein. Im gezeigten gekoppelten Zustand sind die Rastkonturen 113 in ihrer Rastposition P1 und halten so das erste Bauteil 10 am zweiten Bauteil 1000 fixiert. Auch der Verbindungssteg 111 ist in seiner Ruheposition P0. Sofern nun ein Benutzer das erste Bauteil 10 vom zweiten Bauteil 1000 des Stromsystems 1 trennen möchte, betätigt er mit einem Werkzeug - mittels einer der voran beschriebenen Varianten - den Verbindungssteg 111, indem er auf den Anlagebereich 114 mit dem Werkzeug wirkt und diesen mitsamt des Verbindungsstegs 111 von der Ruheposition P0 in die Löseposition P2 bringt. Da der Verbindungssteg 111 entsprechend zwischen den beiden Rastarmen 110 mit selbigen verbunden angeordnet ist, resultiert hierdurch eine Bewegung bzw. Auslenkung der Rastarme 110 um den Verbindungsabschnitt 112 herum. Vorliegend wird - wie auch in Figuren 2 und 5 gezeigt - der Rastarm 110 jeweils nach außen gebogen, die am distalen Ende des Rastarms 110 angeordneten Rastkonturen 113 werden also in der Bewegungsrichtung R2 voneinander wegbewegt. Hierdurch interagieren die Rastkonturen 113 (respektive die gezeigten Rastnasen) nicht mehr mit den Rastelementen 1013 des zweiten Bauteils 1000 und die Kopplung zwischen ersten Bauteil 10 und zweiten Bauteil 1000 ist gelöst und kann ferner beispielsweise durch Bewegung des ersten Bauteils 10 in inverser Kopplungsrichtung K vom zweiten Bauteil 1000 entfernt werden. Hierdurch ist also eine reversible Kopplung geschaffen, welche die Flexibilität innerhalb des Stromschienensystems 1 erhöht.

Mit Blick auf die in der Figur 5 gezeigte Bewegungen R1, R2 der einzelnen Bestandteile der beispielhaften Ausführung des Bauteils 10, und insbesondere der Rastvorrichtung 100, bei Bedienung des Verbindungsstegs 111, ist ersichtlich, dass das distale Ende jedes Rastarms 110 nahezu keinerlei Dehnung erfährt. Die durch Verschieben des Verbindungsstegs 111 von Ruheposition P0 zu Löseposition P2 verursachte Beugung der Rastarme 110 in voneinander weg weisender Bewegungsrichtung R2 von Rastposition P1 zu Freigabeposition P3, wird maßgeblich durch Dehnung der jeweiligen Rastarme 110 im Bereich vor dem Verbindungsabschnitt 112 und dem Kopplungsabschnitt mit dem Verbindungssteg 111 erzeugt. Auch der Verbindungssteg 111 selbst erfährt eine äußerst Starke Dehnung, und ist dabei zur Verbesserung der Dehnungsbeständigkeit und Stabilität im Wesentlichen Bogenförmig geformt. Sowohl in den Rastarmen 110, als auch im Verbindungssteg 111 sind Versteifungsabschnitte eingesetzt, die eine Materialschwächung bei Benutzung verhindern oder zumindest äußerst stark minimieren. Ferner ist aus der Figur 5 auch der stabilitätsfördernde Einfluss des Anlageabschnitts 114 auf den Verbindungssteg 111 ersichtlich.

Ferner ist aus der beispielhaften Ausführung des ersten Bauteils 10 aus Figur 5 ersichtlich, dass bei Betätigung des Verbindungsstegs 111, also bei Kraftausübung auf den mittleren Abschnitt des Verbindungsstegs, in dem auch der Anlagenabschnitt 114 angeordnet sein kann, dieser mittlere Bereich sich in Betätigungsrichtung R1 verschiebt, und dabei bogenartig gespannt wird. Die der Wirkungsfläche bzw. Anlagefläche des Verbindungsstegs 111 in Betätigungsrichtung R1 gegenüberliegende Fläche wird hierbei gedehnt, ebenso wie die seitliche von der Anlagefläche befindlichen Bereiche.

Wie insbesondere aus den Figuren 2, 4 und 5 ersichtlich, kann der Verbindungssteg 111 hierbei insbesondere im Wesentlichen die Form eines inversen Compoundbogens aufweisen. In dieser Ausgestaltung kann die auf den Mittelteil des Verbindungsstegs 111 wirkende Kraft besonders gut übertragen werden, und führt so zunächst zur Auslenkung der mit dem Verbindungssteg 111 gekoppelten Rastarme 110. Bevorzugt sind hierbei die jeweiligen Kopplungsabschnitte zwischen Verbindungssteg 111 und Rastarm 110 jeweils starr ausgebildet, sodass hier im Wesentlichen keine Dehnung erfolgt. Der Rastarm 110 selbst hingegen erfährt im Bereich zwischen dessen Kopplungsabschnitt und dem Verbindungsabschnitt 112 eine Dehnung, und zwar insbesondere im dem Kopplungsabschnitt nachfolgenden Bereich und dem Bereich am Verbindungsabschnitt 112. Zwischen diesen Dehnung erfahrenden Bereichen ist bevorzugt ein Versteifungsabschnitt positioniert, der eine Dehnung in diesem Bereich im Wesentlichen minimiert oder gar verhindert. Der Bereich zwischen Kopplungsabschnitt und distalem Ende des jeweiligen Rastarms 110 erfährt hierbei keinerlei Dehnung oder Stauchung, sodass dieser Bereich und insbesondere die darin angeordnete Rastkontur 113 keine Krafteinwirkung hier erfährt, und somit das Material hier besonders geschont wird. Mit Auslenken der Rastkonturen 113 ist dann beispielsweise ein Trennen von entsprechenden Rastelementen 1013 eines zweiten Bauteils 1000 ermöglicht. Mit Ausbleiben einer auf den Verbindungssteg 111 wirkenden Kraft wirkt die durch die Dehnung der Rastarme 110 und des Verbindungsstegs 111 in der Rastvorrichtung vorhandene Spannung entgegen der Bewegungsrichtung R2 und damit auch schlussendlich entgegen der Verschieberichtung R1 sodass die Rastvorrichtung 100 wieder in ihre Ruhe- bzw. Rastposition P0, P1 zurückkehrt.

Alternativ zur gezeigten beispielhaften Ausführung ist hierbei insbesondere denkbar, dass die Rastkonturen 113 auf den jeweils gegenüberliegenden Seiten des Rastarms 110 in einer Richtung im Wesentlichen senkrecht zur Kopplungsrichtung K angeordnet sind. Hierbei kann es je nach Szenario weiterhin vorteilhaft sein, wenn bei Betätigung des Verbindungsstegs 111 die Rastarme 110 nicht voneinander weg bewegt werden, sondern aufeinander zu, wodurch wiederum eine Kopplung mit dem zweiten Bauteil 1000 gelöst werden kann.

Weiterhin kann die Betätigung des Verbindungsstegs 111 auch in inverser Kopplungsrichtung K erfolgen, wobei obige Ausführungen analog hierzu je nach gegenwärtigem Szenario Anwendung finden können. Auch sind Rastvorrichtungen 100 denkbar, in denen die Rastkonturen 113 in gleicher bzw. paralleler Bewegungsrichtung R2 bewegt werden, wobei hierbei kein symmetrischer Aufbau der Rastvorrichtung möglich ist, da die Kopplung zwischen Verbindungssteg 111 und Rastarmen 110, je Rastarm 110 unterschiedlich ausfällt, um bei Bedienung des Verbindungsstegs 111 eine im Wesentlichen gleichgerichtete und gleichorientierte Bewegung R2 der Rastkonturen 113 zu erzielen. Das jeweils zu berücksichtigende Szenario schließt hierbei insbesondere eine jeweils vorhandene Gestaltung der Rastelemente 1013 am zweiten Bauteil 1000; sowie weitere strukturelle Einschränkungen durch das Stromschienensystem 1 mit ein.

Insofern sind verschiedenste Ausführungsformen für eine erfindungsgemäße Rastvorrichtung 100 einer beispielhaften Implementierung eines erfindungsgemäßen Bauteils 10 gegeben, wobei stets eine reversible Kopplung mit einem zweiten zusätzlichen Bauteil 1000 eines Stromschienensystems 1 ermöglicht ist.

## Patentansprüche

1. Bauteil (10) für ein Stromschienensystem (1), aufweisend:
• einen Basiskörper (200) und,
• eine Rastvorrichtung (100) zur reversiblen Verrastung des Bauteils (10) an einem zweiten Bauteil (1000) des Stromschienensystems (1) bei Bewegung des Bauteils (10) in einer Kopplungsrichtung (K),
wobei die Rastvorrichtung (100) aufweist:
• zwei Rastarme (110) jeweils mit einem proximalen Verbindungsabschnitt (112), mit dem der Rastarm (110) mit dem Basiskörper (200) verbunden ist, und einem vom Basiskörper (200) beabstandeten distalen Rastabschnitt mit einer Rastkontur (113) zur Verrastung des Bauteils (10) an dem zweiten Bauteil (1000) des Stromschienensystems (1), wobei der jeweilige Rastarm (110) derart elastisch verformbar ausgebildet ist, so dass die Rastkontur (113) über den Verbindungsabschnitt (112) von einer Rastposition (P1) in eine Freigabeposition (P3) auslenkbar ist; **dadurch gekennzeichnet, dass** die Rastvorrichtung (100) weiter aufweist:
• einen die beiden Rastarme (110) miteinander direkt verbindenden Verbindungssteg (111), wobei der Verbindungssteg (111) jeweils derart in einem Bereich zwischen Verbindungsabschnitt (112) und Rastkontur (113) mit dem jeweiligen Rastarm (110) gekoppelt ist, so dass bei Bewegung des Verbindungsstegs (111) in einer Verschieberichtung (R1) von einer Ruheposition (P0) in eine Löseposition (P2) die Rastkonturen (113) jeweils durch die elastische Verformung des zugeordneten Rastarms (110) von der Rastposition (P1) in die Freigabeposition (P3) überführbar sind.

2. Bauteil gemäß Anspruch 1,
wobei die Rastarme (110) jeweils in Kopplungsrichtung (K) vom Basiskörper (200) hervorstehen, und/oder
wobei die Rastabschnitte und vorzugsweise die Rastarme (110) sich in einer die Kopplungsrichtung (K) aufweisenden Ebene erstrecken, und/oder
wobei die Verbindungsabschnitte (112) jeweils an einer in Kopplungsrichtung (K) weisenden äußeren Kante des Basiskörpers (200) angeordnet sind.

3. Bauteil gemäß Anspruch 1 oder 2,
wobei die aus der Bewegung des Verbindungsstegs (111) in Verschieberichtung (R1) resultierende Auslenkung der jeweiligen Rastkontur (113) von der Rastposition (P1) in die Freigabeposition (P3) in einer definierten Bewegungsrichtung (R2) erfolgt,
wobei vorzugsweise die Bewegungsrichtungen (R2) der jeweiligen Rastkonturen (113) im Wesentlichen senkrecht zur Verschieberichtung (R1) des Verbindungsstegs (111) orientiert sind, und/oder
wobei vorzugsweise die Bewegungsrichtungen (R2) der jeweiligen Ratskonturen (113) aufeinander zu oder voneinander weg gerichtet sind.

4. Bauteil gemäß einem der vorangehenden Ansprüche,
wobei der Verbindungssteg (111) in einem Bereich zwischen den beiden Rastarmen (110) einen Anlageabschnitt (114) aufweist, über den der Verbindungssteg (111) durch Drücken in die Verschieberichtung (R1) von der Ruheposition (P0) in die Löseposition (P2) bewegbar ist,
wobei der Anlageabschnitt (114) vorzugsweise eine dem Basiskörper (200) zugewandte und/oder eine dem Basiskörper (200) abgewandte Auflagefläche des Verbindungsstegs (111) vergrößert.

5. Bauteil gemäß einem der vorangehenden Ansprüche,
wobei die Kopplung zwischen Verbindungssteg (111) und jeweiligem Rastarm (110) im Wesentlichen starr ist, und/oder
wobei der Verbindungssteg (111) mit den Rastarmen (110) integral einstückig ausgebildet ist.

6. Bauteil gemäß einem der vorangehenden Ansprüche,
wobei die Rastvorrichtung (100) im Wesentlichen spiegelsymmetrisch zu einer Spiegelachse, welche parallel zur Kopplungsrichtung (K) verläuft, ausgebildet ist.

7. Bauteil gemäß einem der vorangehenden Ansprüche,
wobei jede Rastkontur (113) durch eine hervorstehende Rastnase gebildet ist,
wobei die Rastnasen bevorzugt jeweils der Bewegungsrichtung (R2) entgegengesetzt vorstehen.

8. Bauteil gemäß einem der vorangehenden Ansprüche,
wobei die Rastkontur (113) jedes Rastarms (110) auf einer dem jeweils anderen Rastarm (110) zugewandten Seite angeordnet ist; oder
wobei die Rastkontur (113) jedes Rastarms (110) auf einer dem jeweils anderen Rastarm (110) abgewandten Seite angeordnet ist.

9. Bauteil gemäß einem der vorangehenden Ansprüche,
wobei zumindest ein Rastarm (110) einen Stützabschnitt (119) aufweist, welcher, vorzugsweise im Bereich der zugeordneten Rastkontur (113), quer zur Koppelrichtung (K) und vorzugsweise auch quer zur Bewegungsrichtung (R2) seitlich vorragt.

10. Bauteil gemäß einem der vorangehenden Ansprüche,
wobei das Bauteil (10), vorzugsweise der Basiskörper (200), ferner einen Führungsabschnitt (220) zur Führung eines Werkzeugs auf den Verbindungssteg (111) zu aufweist, vorzugsweise parallel zur Verschieberichtung (R1), um den Verbindungssteg (111) von der Ruheposition (P0) in die Löseposition (P2) zu bewegen;
wobei bevorzugt der Führungsabschnitt (220) sich entlang einer Breite (b) des Basiskörpers (200), insbesondere entlang der gesamten Breite (b) des Basiskörpers (200), erstreckt.

11. Bauteil gemäß Anspruch 10,
wobei der Führungsabschnitt (220) als eine Einbuchtung (221) des Basiskörpers (200) gebildet ist, welche sich von einem dem Verbindungssteg (111) zugewandten Ende des Basiskörpers (200), vorzugsweise der äußeren Kante, weg wenigstens teilweise oder vollständig entlang des Basiskörpers (200) vorzugsweise im Wesentlichen parallel zur Verschieberichtung (R1), erstreckt;
wobei bevorzugt:
• die Einbuchtung (221) eine Breite (a) aufweist, und wobei der Führungsabschnitt (220) ferner eine Verjüngung (222) aufweist, welche die Breite (a) der Einbuchtung (221) zum Verbindungssteg (111) hin verjüngt, wobei bevorzugt die Verjüngung (222) zur zentrierten Zuführung eines Werkzeugs auf den Verbindungssteg (111), und insbesondere auf den Anlageabschnitt (114) der Rastvorrichtung (110) ausgebildet ist; und/oder
• die Führungsvorrichtung (220) in einem Endbereich der Einbuchtung (221), der dem Verbindungssteg (111) zugewandt ist, eine in die Einbuchtung (221) vorstehende Erhebung (223) aufweist, wobei bevorzugt die Erhebung (223) zur Zuleitung eines Werkzeugs auf den Verbindungssteg (111), und insbesondere auf den Anlageabschnitt (114) der Rastvorrichtung (110) ausgebildet ist,
und/oder
wobei der Führungsabschnitt (220) eine Durchgangsöffnung von einer Innenseite des Basiskörpers (200) hin zu einer Außenseite des Basiskörpers (200) aufweist, welche sich in Verschieberichtung (R1) zum Verbindungssteg (111) hin erstreckt, und welche sich bevorzugt bis zur dem Verbindungssteg (111) zugewandten Kante des Basiskörpers (200) erstreckt.

12. Bauteil gemäß einem der vorangehenden Ansprüche,
wobei die Rastarme (110) und/oder der Verbindungssteg (111) Versteifungsabschnitte aufweisen; und/oder
wobei das Bauteil (10) ein Spritzgussteil ist; und/oder
wobei das Bauteil (10) integral einstückig gebildet ist.

13. Bauteil gemäß einem der vorangehenden Ansprüche,
wobei das Bauteil (10) ein Berührungsschutz für ein Ende einer Stromschiene des Stromschienensystems (1) ist; oder
wobei das Bauteil (10) ein Komponententräger des Stromschienensystems (1) ist; oder
wobei das Bauteil (10) ein Teil für eine BUS-Bar Verlängerung, beispielsweise eine Stromschiene, des Stromschienensystems (1) ist; oder
wobei das Bauteil (10) ein elektrischer Verbinder des Stromschienensystems (1) ist.

14. Bauteil gemäß einem der vorangehenden Ansprüche,
wobei das Bauteil (10) Kabelkanäle (300), welche parallel zur Kopplungsrichtung (K) verlaufen, aufweist,
wobei bevorzugt das Bauteil (10) im Querschnitt längs zur Kopplungsrichtung (K) im Wesentlichen U-förmig gebildet ist;
wobei bevorzugt die Kabelkanäle (300) auf einer nach innen gewandten Seite des Basiskörpers (200) angeordnet sind.

15. Stromschienensystem (1) aufweisend ein erstes Bauteil (10) gemäß einem der vorangehenden Ansprüche, und ein zweites Bauteil (1000),
wobei das zweite Bauteil (1000) zumindest zwei Rastelemente (1013) aufweist, welche zur Interaktion mit den Rastkonturen (113) der Rastvorrichtung (100) des ersten Bauteils (10) ausgebildet sind,
wobei die Rastvorrichtung (100) des ersten Bauteils (10) mit dem Rastelement (1013) reversibel gekoppelt ist,
wobei bevorzugt das zweite Bauteil (1000) eine Stromschiene ist.

## Claims

1. A component (10) for a track system (1), comprising:
a base body (200); and
a latching device (100) for reversibly latching the component (10) to a second component (1000) of the track system (1) when the component (10) is moved in a coupling direction (K),
wherein the latching device (100) comprises:
two latching arms (110), each having a proximal connecting portion (112), by means of which the latching arm (110) is connected to the base body (200), and a distal latching portion spaced apart from the base body (200) and having a latching contour (113) for latching the component (10) to the second component (1000) of the track system (1), wherein the respective latching arm (110) is configured to be elastically deformable such that the latching contour (113) can be deflected, via the connecting portion (112), from a latching position (P1) into a release position (P3);
**characterised in that**
the latching device (100) further comprises:
a connecting web (111) directly connecting the two latching arms (110) to one another, wherein the connecting web (111) is coupled to each respective latching arm (110), in each case in a region between the connecting portion (112) and the latching contour (113), such that, when the connecting web (111) is moved in a displacement direction (R1) from a rest position (P0) into a disengagement position (P2), the latching contours (113) can each be transferred from the latching position (P1) into the release position (P3) by elastic deformation of the associated latching arm (110).

2. The component according to claim 1,
wherein the latching arms (110) each project from the base body (200) in the coupling direction (K),
and/or
wherein the latching portions and preferably the latching arms (110) extend in a plane containing the coupling direction (K),
and/or
wherein the connecting portions (112) are each arranged at an outer edge of the base body (200) facing in the coupling direction (K).

3. The component according to claim 1 or 2,
wherein the deflection of the respective latching contour (113) from the latching position (P1) into the release position (P3), resulting from the movement of the connecting web (111) in the displacement direction (R1), takes place in a defined direction of movement (R2),
wherein preferably the directions of movement (R2) of the respective latching contours (113) are oriented substantially perpendicular to the displacement direction (R1) of the connecting web (111),
and/or
wherein preferably the directions of movement (R2) of the respective latching contours (113) are directed towards one another or away from one another.

4. The component according to any one of the preceding claims,
wherein the connecting web (111) has, in a region between the two latching arms (110), a contact portion (114), via which the connecting web (111) can be moved, by being pressed in the displacement direction (R1), from the rest position (P0) into the disengagement position (P2),
wherein the contact portion (114) preferably enlarges a bearing surface of the connecting web (111) facing the base body (200) and/or a bearing surface of the connecting web (111) facing away from the base body (200).

5. The component according to any one of the preceding claims,
wherein the coupling between the connecting web (111) and the respective latching arm (110) is substantially rigid,
and/or
wherein the connecting web (111) is formed integrally in one piece with the latching arms (110).

6. The component according to any one of the preceding claims,
wherein the latching device (100) is configured to be substantially mirror-symmetrical with respect to an axis of symmetry extending parallel to the coupling direction (K).

7. The component according to any one of the preceding claims,
wherein each latching contour (113) is formed by a projecting latching lug,
wherein the latching lugs preferably each project in a direction opposite to the direction of movement (R2).

8. The component according to any one of the preceding claims,
wherein the latching contour (113) of each latching arm (110) is arranged on a side facing the respective other latching arm (110); or
wherein the latching contour (113) of each latching arm (110) is arranged on a side facing away from the respective other latching arm (110).

9. The component according to any one of the preceding claims,
wherein at least one latching arm (110) has a support portion (119) which, preferably in the region of the associated latching contour (113), projects laterally transversely to the coupling direction (K) and preferably also transversely to the direction of movement (R2).

10. The component according to any one of the preceding claims,
wherein the component (10), preferably the base body (200), further has a guide portion (220) for guiding a tool towards the connecting web (111), preferably parallel to the displacement direction (R1), in order to move the connecting web (111) from the rest position (P0) into the disengagement position (P2);
wherein preferably the guide portion (220) extends along a width (b) of the base body (200), in particular along the entire width (b) of the base body (200).

11. The component according to claim 10,
wherein the guide portion (220) is formed as a recess (221) in the base body (200), which recess extends away from an end of the base body (200) facing the connecting web (111), preferably from the outer edge, at least partially or completely along the base body (200), preferably substantially parallel to the displacement direction (R1);
wherein preferably:
the recess (221) has a width (a), and the guide portion (220) further has a tapered portion (222) which narrows the width (a) of the recess (221) towards the connecting web (111), wherein preferably the tapered portion (222) is configured for centrally guiding a tool towards the connecting web (111), and in particular towards the contact portion (114) of the latching device (110);
and/or
the guide device (220) has, in an end region of the recess (221) facing the connecting web (111), a projection (223) projecting into the recess (221), wherein preferably the projection (223) is configured for guiding a tool towards the connecting web (111), and in particular towards the contact portion (114) of the latching device (110);
and/or
wherein the guide portion (220) has a through-opening extending from an inner side of the base body (200) to an outer side of the base body (200), which through-opening extends in the displacement direction (R1) towards the connecting web (111) and preferably extends as far as the edge of the base body (200) facing the connecting web (111).

12. The component according to any one of the preceding claims,
wherein the latching arms (110) and/or the connecting web (111) have reinforcing portions;
and/or
wherein the component (10) is an injection-moulded part;
and/or
wherein the component (10) is formed integrally in one piece.

13. The component according to any one of the preceding claims,
wherein the component (10) is a touch-protection element for an end of a track of the track system (1); or
wherein the component (10) is a component carrier of the track system (1); or
wherein the component (10) is a part for a busbar extension, for example a track, of the track system (1); or
wherein the component (10) is an electrical connector of the track system (1).

14. The component according to any one of the preceding claims,
wherein the component (10) has cable channels (300) extending parallel to the coupling direction (K);
wherein preferably the component (10) is substantially U-shaped in cross-section longitudinally with respect to the coupling direction (K);
wherein preferably the cable channels (300) are arranged on an inwardly facing side of the base body (200).

15. A track system (1) comprising a first component (10) according to any one of the preceding claims and a second component (1000),
wherein the second component (1000) has at least two latching elements (1013) configured to interact with the latching contours (113) of the latching device (100) of the first component (10),
wherein the latching device (100) of the first component (10) is reversibly coupled to the latching element (1013),
wherein preferably the second component (1000) is a track.

## Revendications

1. Composant (10) pour un système de rail électrique (1), comprenant :
un corps de base (200) ; et
un dispositif d'encliquetage (100) destiné à encliqueter de manière réversible le composant (10) sur un deuxième composant (1000) du système de rail électrique (1) lors d'un déplacement du composant (10) dans une direction d'accouplement (K),
dans lequel le dispositif d'encliquetage (100) comprend :
deux bras d'encliquetage (110) comportant chacun une portion de liaison proximale (112), par laquelle le bras d'encliquetage (110) est relié au corps de base (200), et une portion d'encliquetage distale, espacée du corps de base (200), comportant un contour d'encliquetage (113) destiné à encliqueter le composant (10) sur le deuxième composant (1000) du système de rail électrique (1), le bras d'encliquetage (110) respectif étant réalisé de manière à pouvoir être déformé élastiquement de telle sorte que le contour d'encliquetage (113) puisse être dévié, par l'intermédiaire de la portion de liaison (112), d'une position d'encliquetage (P1) vers une position de libération (P3) ;
**caractérisé en ce que**
le dispositif d'encliquetage (100) comprend en outre :
une entretoise de liaison (111) reliant directement entre eux les deux bras d'encliquetage (110), l'entretoise de liaison (111) étant couplée à chacun des bras d'encliquetage (110) respectifs, dans une zone située entre la portion de liaison (112) et le contour d'encliquetage (113), de telle sorte que, lors d'un déplacement de l'entretoise de liaison (111) dans une direction de déplacement (R1), d'une position de repos (P0) vers une position de désengagement (P2), les contours d'encliquetage (113) puissent chacun être amenés de la position d'encliquetage (P1) à la position de libération (P3) par la déformation élastique du bras d'encliquetage (110) associé.

2. Composant selon la revendication 1,
dans lequel les bras d'encliquetage (110) font chacun saillie depuis le corps de base (200) dans la direction d'accouplement (K),
et/ou
dans lequel les portions d'encliquetage et, de préférence, les bras d'encliquetage (110) s'étendent dans un plan contenant la direction d'accouplement (K),
et/ou
dans lequel les portions de liaison (112) sont chacune disposées sur un bord extérieur du corps de base (200) orienté dans la direction d'accouplement (K).

3. Composant selon la revendication 1 ou 2,
dans lequel la déviation du contour d'encliquetage (113) respectif de la position d'encliquetage (P1) vers la position de libération (P3), résultant du déplacement de l'entretoise de liaison (111) dans la direction de déplacement (R1), s'effectue dans une direction de mouvement définie (R2),
dans lequel, de préférence, les directions de mouvement (R2) des contours d'encliquetage (113) respectifs sont orientées sensiblement perpendiculairement à la direction de déplacement (R1) de l'entretoise de liaison (111),
et/ou
dans lequel, de préférence, les directions de mouvement (R2) des contours d'encliquetage (113) respectifs sont dirigées l'une vers l'autre ou à l'opposé l'une de l'autre.

4. Composant selon l'une quelconque des revendications précédentes,
dans lequel l'entretoise de liaison (111) comporte, dans une zone située entre les deux bras d'encliquetage (110), une portion d'appui (114), par l'intermédiaire de laquelle l'entretoise de liaison (111) peut être déplacée, par pression dans la direction de déplacement (R1), de la position de repos (P0) vers la position de désengagement (P2),
dans lequel la portion d'appui (114) agrandit de préférence une surface d'appui de l'entretoise de liaison (111) tournée vers le corps de base (200) et/ou une surface d'appui de l'entretoise de liaison (111) tournée à l'opposé du corps de base (200).

5. Composant selon l'une quelconque des revendications précédentes,
dans lequel le couplage entre l'entretoise de liaison (111) et le bras d'encliquetage (110) respectif est sensiblement rigide,
et/ou
dans lequel l'entretoise de liaison (111) est réalisée d'un seul tenant avec les bras d'encliquetage (110).

6. Composant selon l'une quelconque des revendications précédentes,
dans lequel le dispositif d'encliquetage (100) est réalisé de manière sensiblement symétrique en miroir par rapport à un axe de symétrie s'étendant parallèlement à la direction d'accouplement (K).

7. Composant selon l'une quelconque des revendications précédentes,
dans lequel chaque contour d'encliquetage (113) est formé par un ergot d'encliquetage saillant,
dans lequel les ergots d'encliquetage font de préférence chacun saillie dans une direction opposée à la direction de mouvement (R2).

8. Composant selon l'une quelconque des revendications précédentes,
dans lequel le contour d'encliquetage (113) de chaque bras d'encliquetage (110) est disposé sur un côté tourné vers l'autre bras d'encliquetage (110) respectif ; ou
dans lequel le contour d'encliquetage (113) de chaque bras d'encliquetage (110) est disposé sur un côté tourné à l'opposé de l'autre bras d'encliquetage (110) respectif.

9. Composant selon l'une quelconque des revendications précédentes,
dans lequel au moins un bras d'encliquetage (110) comporte une portion de support (119) qui, de préférence dans la zone du contour d'encliquetage (113) associé, fait latéralement saillie transversalement à la direction d'accouplement (K) et, de préférence, également transversalement à la direction de mouvement (R2).

10. Composant selon l'une quelconque des revendications précédentes,
dans lequel le composant (10), de préférence le corps de base (200), comporte en outre une portion de guidage (220) destinée à guider un outil vers l'entretoise de liaison (111), de préférence parallèlement à la direction de déplacement (R1), afin de déplacer l'entretoise de liaison (111) de la position de repos (P0) vers la position de désengagement (P2) ;
dans lequel la portion de guidage (220) s'étend de préférence le long d'une largeur (b) du corps de base (200), notamment le long de toute la largeur (b) du corps de base (200).

11. Composant selon la revendication 10,
dans lequel la portion de guidage (220) est formée par un renfoncement (221) du corps de base (200), lequel s'étend, à partir d'une extrémité du corps de base (200) tournée vers l'entretoise de liaison (111), de préférence à partir du bord extérieur, au moins partiellement ou complètement le long du corps de base (200), de préférence sensiblement parallèlement à la direction de déplacement (R1) ;
dans lequel, de préférence :
le renfoncement (221) présente une largeur (a), et la portion de guidage (220) comporte en outre une portion rétrécie (222) qui réduit la largeur (a) du renfoncement (221) en direction de l'entretoise de liaison (111), la portion rétrécie (222) étant de préférence conçue pour guider de manière centrée un outil vers l'entretoise de liaison (111), et notamment vers la portion d'appui (114) du dispositif d'encliquetage (110) ;
et/ou
le dispositif de guidage (220) comporte, dans une zone d'extrémité du renfoncement (221) tournée vers l'entretoise de liaison (111), une saillie (223) faisant saillie dans le renfoncement (221), la saillie (223) étant de préférence conçue pour guider un outil vers l'entretoise de liaison (111), et notamment vers la portion d'appui (114) du dispositif d'encliquetage (110) ;
et/ou
dans lequel la portion de guidage (220) comporte une ouverture traversante allant d'un côté intérieur du corps de base (200) à un côté extérieur du corps de base (200), laquelle ouverture traversante s'étend dans la direction de déplacement (R1) vers l'entretoise de liaison (111) et s'étend de préférence jusqu'au bord du corps de base (200) tourné vers l'entretoise de liaison (111).

12. Composant selon l'une quelconque des revendications précédentes,
dans lequel les bras d'encliquetage (110) et/ou l'entretoise de liaison (111) comportent des portions de renforcement ;
et/ou
dans lequel le composant (10) est une pièce moulée par injection ;
et/ou
dans lequel le composant (10) est réalisé d'un seul tenant.

13. Composant selon l'une quelconque des revendications précédentes,
dans lequel le composant (10) est un élément de protection contre les contacts destiné à une extrémité d'un rail électrique du système de rail électrique (1) ; ou
dans lequel le composant (10) est un support de composants du système de rail électrique (1) ; ou
dans lequel le composant (10) est une pièce destinée à une extension de barre omnibus, par exemple un rail électrique, du système de rail électrique (1) ; ou
dans lequel le composant (10) est un connecteur électrique du système de rail électrique (1).

14. Composant selon l'une quelconque des revendications précédentes,
dans lequel le composant (10) comporte des canaux de câbles (300) s'étendant parallèlement à la direction d'accouplement (K) ;
dans lequel le composant (10) présente de préférence une forme sensiblement en U dans une section transversale longitudinale par rapport à la direction d'accouplement (K) ;
dans lequel les canaux de câbles (300) sont de préférence disposés sur un côté du corps de base (200) tourné vers l'intérieur.

15. Système de rail électrique (1) comprenant un premier composant (10) selon l'une quelconque des revendications précédentes et un deuxième composant (1000),
dans lequel le deuxième composant (1000) comporte au moins deux éléments d'encliquetage (1013) conçus pour interagir avec les contours d'encliquetage (113) du dispositif d'encliquetage (100) du premier composant (10),
dans lequel le dispositif d'encliquetage (100) du premier composant (10) est couplé de manière réversible à l'élément d'encliquetage (1013),
dans lequel le deuxième composant (1000) est de préférence un rail électrique.
